Europäisches Patentamt

(19) European Patent Office

Office européen des brevets

(11) Veröffentlichungsnummer: **0 291 817 B1**

# (12) EUROPÄISCHE PATENTSCHRIFT

(45) Veröffentlichungstag der Patentschrift:
29.05.91 Patentblatt 91/22

(51) Int. Cl.⁵ : **B60R 21/26**

(21) Anmeldenummer: 88107457.9

(22) Anmeldetag: 10.05.88

(54) Gaserzeuger für einen Airbag.

(30) Priorität: 22.05.87 DE 3717249
16.12.87 DE 3742656

(43) Veröffentlichungstag der Anmeldung:
23.11.88 Patentblatt 88/47

(45) Bekanntmachung des Hinweises auf die
Patenterteilung:
29.05.91 Patentblatt 91/22

(84) Benannte Vertragsstaaten:
BE CH DE ES FR GB IT LI SE

(56) Entgegenhaltungen:
DE-A- 2 302 648
US-A- 4 414 902
US-A- 4 437 681
US-A- 4 698 107

(73) Patentinhaber: **Dynamit Nobel
Aktiengesellschaft
Postfach 12 61
W-5210 Troisdorf (DE)**

(72) Erfinder: **Bender, Richard, Dr.
Hohe Marter 28
W-8560 Lauf (DE)**
Erfinder: **Scheiderer, Gerrit
Spitzwiesenstrasse 16
W-8510 Fürth (DE)**

## Beschreibung

Die Erfindung richtet sich auf einen Gaserzeuger für einen Airbag, bestehend aus einem Druckbehälter in Verbindung mit einem Anzündelement, wobei nach dessen Initiierung eine gasfreisetzende Substanz im Druckbehälter verbrannt wird und das Gas durch mit Filter abgedeckte Öffnungen in der Wand des Druckbehälters in einen darübergestülpten Airbag strömt.

Bei dem als Airbag bekannten Sicherungssystem für Fahrzeuginsassen wird, wenn ein Zusammenstoßfühler eine schnelle Verzögerung erkennt, ein Gaserzeuger ausgelöst, der eine expansionsfähige Umschließung oder Umhüllung aufbläst, die den Fahrzeuginsassen zurückhält oder auffängt. Für den Fahrzeuglenker sind in der Regel Gaserzeuger mit Airbag im Lenkrad, für den Beifahrer im Armaturenbrett angeordnet.

Verschiedene Ausführungsformen von Gaserzeugern und Hinweise auf die jeweiligen Schwächen sind beispielsweise den DE-A-23 64 268, DE-A-25 51 920, EP-B-17 736, EP-A-180 408 zu entnehmen. Bei allen Systemen müssen heiße Partikel, die bei der Verbrennung entstehen, aus dem Gasstrom herausgefiltert werden, damit sie nicht unmittelbar in den Luftsack gelangen. Es haben sich zwei, im wesentlichen zylindrischen Formen von Gaserzeugern herausgebildet, eine scheibenförmige Art mit erheblich größerem Durchmesser als der Zylindermantelhöhe und eine längliche Art mit erheblich kleinerem Durchmesser als der Zylindermantelhöhe.

Bei der ersten Form ist das Anzündelement zentral im Druckbehälter angeordnet. Das bei der Verbrennung gaserzeugende Mittel ist in einem Ringraum um das zentrale Anzündelement verteilt. Das Treibmittel ist in Form von Tabletten oder Pellets oder Granulat gepreßt und füllt den Raum nicht vollständig aus. Es sind dadurch hinreichend Kanäle für die Anzündschwaden vorhanden. Nachteilig ist der Abrieb an dem geschütteten Gut. Die Gasaustrittsöffnungen sind an der Außenseite der Zylindermantelfläche. Ein solcher Gaserzeuger ist fertigungstechnisch sehr aufwendig. Bei der zweiten Form befindet sich das Anzündelement auch meist zentral axial in dem Druckbehälter, und der Raum um das Anzündelement ist wieder mit dem festen stückigen Treibmittel ausgefüllt. Die Gasaustrittsöffnungen sind auch hier auf der Zylindermantelfläche, gewöhnlich aber nur in einem kleineren Sektor.

Die Gehäuse der obenerwähnten Gaserzeuger sind schwierig zu fertigen und zusammenzubauen. Gewichtsgründe und Materialeinsparungen zwingen zu einem möglichst dünnwandigen Gehäuse, das erfordert aber andererseits zusätzliche Versteifungen. Häufig sind vor die Filter an den Gasaustrittsöffnungen Filterkammern vorgeschaltet. Für Großserien sind die komplizierten und kostspieligen Fertigungsschritte sehr nachteilig.

Der Erfindung liegt die Aufgabe zugrunde, einen Gaserzeuger zu schaffen, der sich einfach fertigen läßt und bekannte Nachteile möglichst vermeidet.

Die Aufgabe wird von einem Gaserzeuger gelöst, der dadurch gekennzeichnet ist, daß an einem das Anzündelement enthaltenden Zentralkörper strahlenförmig mindestens zwei rohrförmige Druckbehälter befestigt sind, die gasfreisetzenden Substanzen in Form von stapelbaren Preßlingen in säulenartiger Packung den Rohrquerschnitt annähernd ausfüllen und wenigstens ein Gaskanal in jeder säulenartigen Packung vorhanden ist.

Mit dem Ausdruck "strahlenförmig" soll auch der wichtige Fall umfaßt sein, daß an dem Zentralkörper zwei Rohre gegenüberliegend befestigt sind, was insbesondere für einen nicht rotationssymmetrischen Airbag vorteilhaft sein kann.

Das Wort "strahlenförmig" soll die einseitige Art der Befestigung der Druckbehälter am Zentralkörper charakterisieren, nicht dagegen eine Punktsymmetrie. Insbesondere bei modern gestalteten Lenkrädern kann es erforderlich werden, Lage und Länge der Druckbehälter an den zur Verfügung stehenden Raum anzupassen.

Die Druckbehälter müssen nicht unbedingt in einer Ebene liegen, sondern sie können beispielsweise auch eine Kegelfläche aufspannen. Wenn der zur Verfügung stehende Raum eher eine rechtwinklige Grundfläche hat, ist statt einer Rotationssymmetrie eher eine Spiegelsymmetrie bevorzugt.

Vorteilhafte Ausführungsformen sind in den Unteransprüchen beschrieben.

Es ist besonders vorteilhaft, daß man statt eines kompliziert geformten größeren Druckraumes mindestens zwei kleinere rohrförmige Druckräume (im Normalfall gerade Kreiszylinder hat. Diese für die Festigkeit und Fertigung günstige Form erlaubt auch in einfacher Weise eine optimale Anordnung des Treibmittels in Form stapelbarer Preßlinge.

Dabei müssen – wie dem Fachmann grundsätzlich bekannt – je nach Art des Treibmittels und dessen Menge Kanäle für die Anzündschwaden vorhanden sein. Beispielsweise ist eine zentrale Bohrung in scheibenförmigen Preßlingen besonders bevorzugt.

Bei den erfindungsgemäßen Gaserzeugern wird ein kleinstmögliches Volumen der Druckbehälter erreicht, weil das Treibmittel durch die säulenartige Anordnung der stapelbaren Preßlinge in dichtestmöglicher Packung vorliegt.

Es versteht sich, daß beispielsweise bei einem quadratischen Rohr scheibenförmige Preßlinge eine quadratische Form haben müßten oder strangörmige Preßlinge (die auch extrudiert sein können) beispielsweise die halbe Länge des Druckbehälters haben können.

Bei runden strangförmigen Preßlingen ("Stangenpulver"), die gewöhnlich die ganze Länge des Druckbehälters haben, entstehen durch die unvermeidlichen Zwickel zwischen den Preßlingen schon genügend "natürliche" Gaskanäle.

Die säulenartige Anordnung der gasfreisetzenden Substanz in dem Druckgehäuse hat auch zur Folge, daß der Abrieb kleiner ist als beider bekannten "geschütteten" Anordnung. Wegen der geforderten langen Funktionsbereitschaft von beispielsweise 10 Jahren oder mehr ist es sehr wichtig, daß das Treibmittel durch die ständigen Erschütterungen nicht zu stark pulverisiert wird. Es muß vermieden werden, daß sich so viel Pulver bildet, daß es bei der Entzündung zu einer Verpuffung kommt. Bei der erfindungsgemäßen Vorrichtung kann hinsichtlich der Wandstärke des Druckbehälters von einem geordneten Abbrennen größerer fester Körper ausgegangen werden. Durch die vorgeschlagene Anordnung ist für lange Zeit gewährleistet, daß sich die Oberfläche des Treibmittels nicht wesentlich ändert und das Kanalnetz in optimaler Weise erhalten bleibt.

. Von Treibladungsanzündern bei Mörsergranaten ist beispielsweise bekannt, daß die Treibladungsscheiben, die auf den Schaft der Granaten aufgesetzt werden, einen Mindestabstand untereinander haben sollen, und daher sind beispielsweise Noppen auf den Scheiben vorhanden, wodurch eindeutig ein gewisser Gasraum zwischen den Scheiben stets freibleibt. Ähnliche Maßnahmen sind auch bei den beanspruchten Gaserzeugern möglich und sinnvoll.

Auch strangförmige Preßlinge könnten zur Vergrößerung des Abstandes untereinander mit Abstandshaltern versehen werden.

Eine weitere sehr vorteilhafte Maßnahme ist es, die stapelbaren Preßlinge mit einem Schrumpfschlauch oder anderen armierenden Überzügen (z.B. netzförmigen) zu ummanteln und das Paket dann in den Druckbehälter einzusetzen. Diese fertigungstechnische Vereinfachung hat zusätzlich den Vorteil, daß die Preßlinge zusammengehalten werden und der Abrieb weiter vermindert werden kann. Änderungen der Abbrand-Charakteristik bleiben daher auch über lange Zeiträume klein.

Die Erfindung ist in der Zeichnung dargestellt und im folgenden weiter beispielhaft beschrieben. Es zeigen :

Figur 1 Gaserzeuger mit drei Rohren in einer Ebene in Seitenansicht und teilweise im Schnitt ;
Figur 2 Gaserzeuger nach Figur 1 in Draufsicht ;
Figur 3 Gaserzeuger mit zwei Rohren in gerader Linie in Seitenansicht und teilweise im Schnitt ;
Figur 4 Gaserzeuger nach Figur 3 in Draufsicht ;
Figur 5 scheibenförmiger Preßling in Draufsicht ;
Figur 6 scheibenförmiger Preßling im Schnitt ;
Figur 7 Gaserzeuger mit zwei Rohren zum Einbau in einen nierenförmigen Raum in einem Lenkrad in Draufsicht ;
Figur 8 Gaserzeuger in Seitenansicht zum Einbau in ein Lenkrad, das in der Mitte eine Vertiefung aufweisen soll.

Der erfindungsgemäße Gasgenerator besteht aus einem Zentralkörper 1, mindestens zwei rohrförmigen Druckbehältern 2, die mit der gaserzeugenden Substanz (Treibmittel) in Form von scheibenförmigen Preßlingen 3 weitgehend ausgefüllt sind.

Im Zentralkörper 1 ist das Anzündelement 4 mit einer Aufladung 5 untergebracht. Bei der nicht gezeigten elektrischen Initiierung durch einen Beschleunigungssensor wird über die Öffnung 6 die rasche Verbrennung der gaserzeugenden Substanzen 3 in dem Druckbehälter 2 eingeleitet.

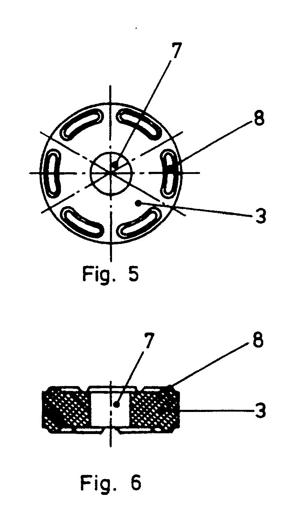

In diesem Beispiel besitzt jeder scheibenförmige Preßling 3 eine zentrale Bohrung 7 ; damit ist in einfacher Weise gewährleistet, daß stets ein Kanal vorhanden ist, der auch nicht überdimensioniert werden muß, da sich der Querschnitt nicht verkleinern kann. In den Figuren 5 und 6 ist ein scheibenförmiger Preßling genauer dargestellt ; er hat eine zentrale Bohrung 7 sowie Noppen 8, wodurch ein Abstandsbereich 9 zwischen den scheibenförmigen Preßlingen 3 geschaffen werden kann, um eine optimale Verbrennung der Preßlinge 3 zu erreichen.

Zur Steuerung der Abbrandgeschwindigkeit und damit des gewünschten Druckaufbaus hat der Fachmann die Möglichkeit, zahlreiche Parameter wie die chemische Zusammensetzung, Zahl, Dicke und Länge der Preßlinge, Größe der Bohrung, Zahl und Form der Noppen zu variieren. Der Druckaufbau im Airbag wird auch bestimmt durch Zahl, Durchmesser und Anordnung der Austrittsöffnungen 10 in der Zylindermantelfläche des Druckbehälters 2. Zwischen den scheibenförmigen Preßlingen 3 und den Öffnungen 10 ist eine Filtereinheit 11 angebracht.

Die rohrförmigen Druckbehälter 2 werden von einer Abdeckfolie 12 dicht umschlossen. Auch durch deren Öffnungsverhalten wird der Druckaufbau im Airbag mit beeinflußt.

Es ist besonders vorteilhaft, alle scheibenförmigen Preßlinge eines Rohres in einem Kunststoff-Schrumpfschlauch 13 einzupacken. Die Handhabung wird erleichtert und der Abrieb noch weiter verkleinert.

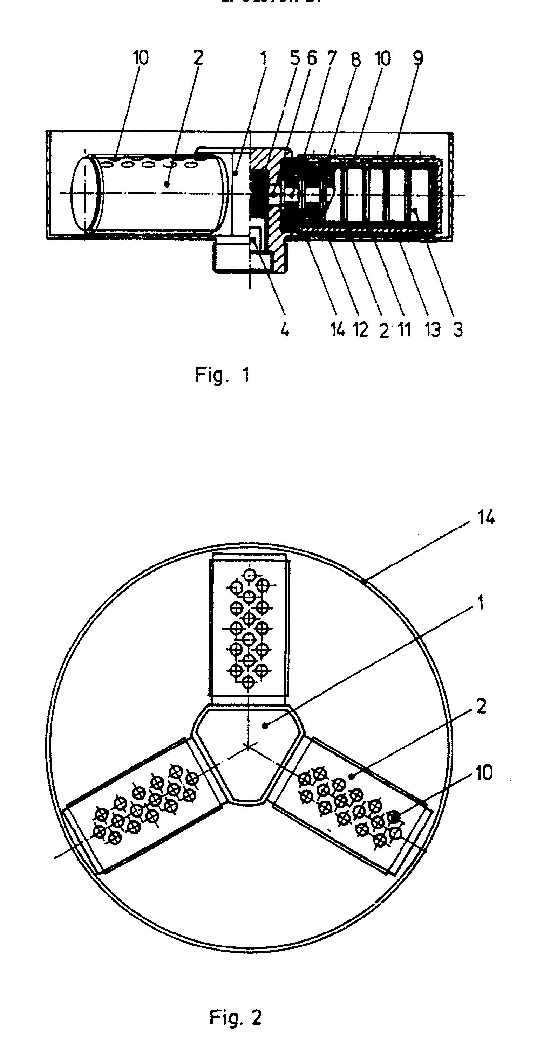

Der in Figur 1 und 2 gezeigte Gasgenerator ist für den Einbau im Lenkrad konzipiert worden. Daher sind die Öffnungen 10 im rohrförmigen Druckbehälter 2 nur in dem oberen Bereich angebracht. Zusätzlich ist ein Leitblech 14 vorgesehen. Der Airbag kann an dem Gaserzeuger in einfacher Weise befestigt werden.

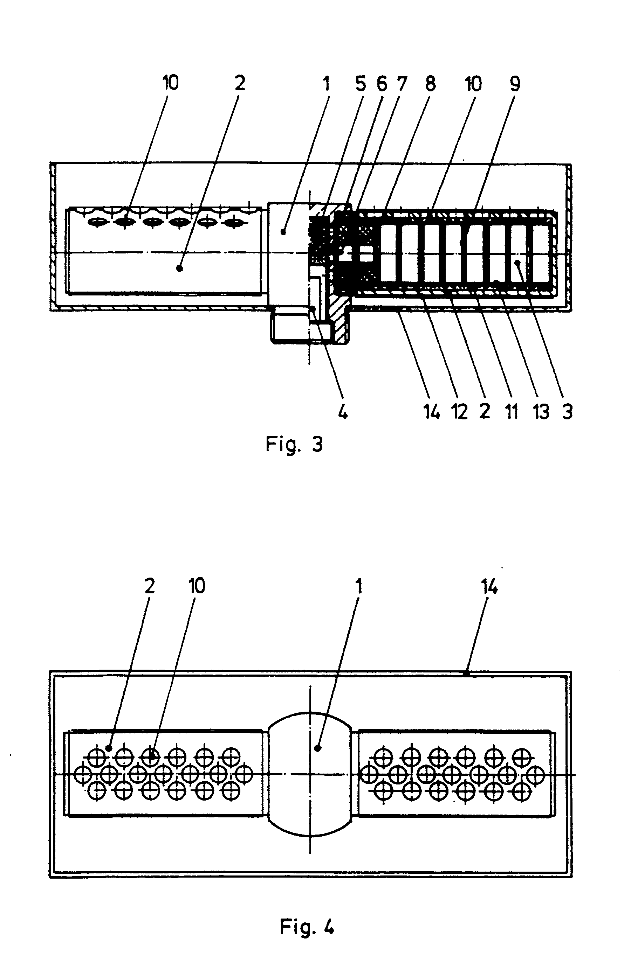

Ein Gaserzeuger mit zwei rohrförmigen Druckbehältern ist in den Figuren 3 und 4 dargestellt. Er eignet sich auch zum Einbau in ein Lenkrad, bevorzugt ist jedoch der Einbau auf der Beifahrerseite. In der Wirkung gleiche Teile tragen die gleichen Bezugszeichen wie in den Figuren 1 und 2.

Ein scheibenförmiger Preßling ist in den Figuren 5 und 6 nocheinmal gesondert dargestellt. Die Form und die Größe sind an den Innendurchmesser des rohrförmigen Druckbehälters 2 angepaßt. Eine Innenbohrung 6 reicht für eine schnelle gleichmäßige Anzündung in vielen Fällen aus. Die Verpackung solcher scheibenförmiger Preßlinge in einem Schrumpfschlauch trägt zur Schockunempfindlichkeit bei, erleichtert die Montage und vermindert den Abrieb.

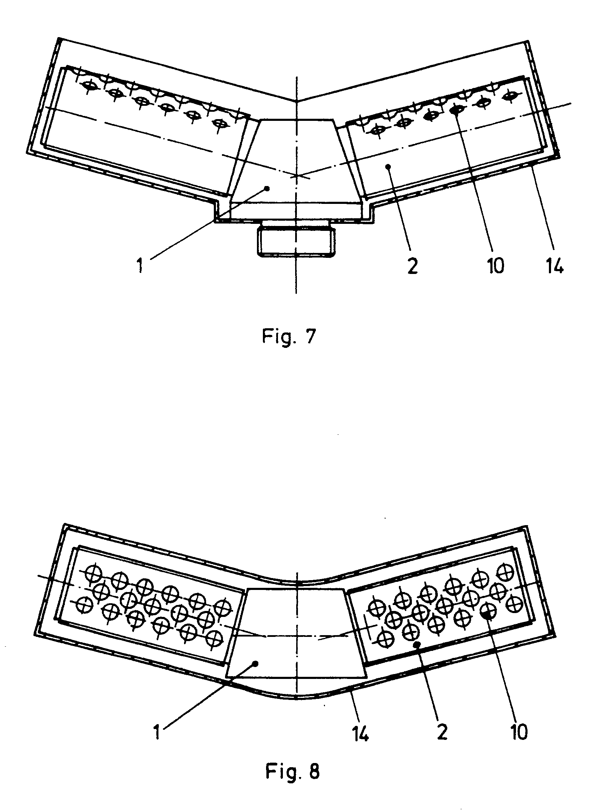

Die Anordnung der Druckbehälter 2 an dem Zentralkörper 1 in den Figuren 7 und 8 soll zeigen, daß der Raum im Lenkrad nicht notwendigerweise zylindrisch sein muß, sondern der Gaserzeuger an einem überwiegend durch die Ästhetik bestimmten nierenförmigen oder kegelförmigen Raum angepaßt werden kann.

Geeignete Zusammensetzungen für die Preßlinge sind an sich bekannt, eine Mischung enthält beispielsweise rund 57% $NaN_3$, 18 $KNO_3$ und 24% $SiO_2$.

## Ansprüche

1. Gaserzeuger für einen Airbag, bestehend aus einem Druckbehälter in Verbindung mit einem Anzündelement (4), wobei nach dessen Initiierung eine gasfreisetzende Substanz im Druckbehälter verbrannt wird und das Gas durch mit Filter (11) abgedeckte Öffnungen (10) in der Wand des Druckbehälters in einen darüber gestülpten Airbag strömt, **dadurch gekennzeichnet,** daß an einem das Anzündelement (4) enthaltenden Zentralkörper (1) strahlenförmig mindestens zwei rohrförmige Druckbehälter (2) befestigt sind, die gasfreisetzenden Substanzen in Form von stapelbaren Preßlingen (3) in säulenartiger Packung den Rohrquerschnitt annähernd ausfüllen und wenigstens ein Gaskanal (7) in jeder säulenförmigen Packung vorhanden ist.

2. Gaserzeuger nach Anspruch 1, **dadurch gekennzeichnet,** daß die rohrförmigen Druckbehälter (2) gleich ausgebildet und rotationssymmetrisch oder spiegelbildlich an dem Zentralkörper (1) befestigt sind.

3. Gaserzeuger nach Anspruch 1 oder 2, **dadurch gekennzeichnet,** daß der rohrförmige Druckbehälter (2) ein gerader Kreiszylinder ist.

4. Gaserzeuger nach Anspruch 1, 2 oder 3, **dadurch gekennzeichnet,** daß die stapelbaren Preßlinge (3) scheibenförmige Form haben und im Durchmesser an den Querschnitt des Druckbehälters (2) angepaßt sind.

5. Gaserzeuger nach Anspruch 4, **dadurch gekennzeichnet,** daß im scheibenförmigen Preßling (3) eine zentrale Bohrung (7) vorhanden ist.

6. Gaserzeuger nach Anspruch 4 oder 5, **dadurch gekennzeichnet,** daß an dem scheibenförmigen Preßling (3) Erhebungen (8) und/oder Vertiefungen angebracht sind, durch die sich bei säulenförmiger Packung Zwischenräume (9) zwischen den scheibenförmigen Preßlingen (3) bilden.

7. Gaserzeuger nach Anspruch 1, 2 oder 3, **dadurch gekennzeichnet,** daß die stapelbaren Preßlinge strangförmige Form haben und in der Länge an die Länge des Druckbehälters angepaßt sind.

8. Gaserzeuger nach einem der Ansprüche 1 bis 7, **dadurch gekennzeichnet,** daß die säulenförmige Packung der stapelbaren Preßlinge (3) mit einem Schrumpfschlauch (13) oder anderen armierenden Überzügen ummantelt ist.

## Claims

1. Gas generator for an airbag, consisting of a pressure container in combination with an ignition element (4), wherein, after its initiation, a gas liberating substance in the pressure container undergoes combustion and the gas flows through openings (10) in the wall of the pressure container into an airbag inverted thereover, the openings being covered with filter (11), characterised in that there are secured radiatingly on a central body (1) containing the ignition element (4) at least two tubular pressure containers (2), the gas liberating substances in the form of stackable pressings (3) approximately fill the tube cross-section in column-type package and at least one gas channel (7) is provided in each column shaped package.

2. Gas generator according to claim 1, characterised in that the tubular pressure containers (2) are formed the same and are secured rotation symmetrically or mirror-image wise to the central body (1).

3. Gas generator according to claim 1 or 2, characterised in that the tubular pressure container (2) is a straight circular cylinder.

4. Gas generator according to claim 1, 2 or 3, characterised in that the stackable pressings (3) have disc-shaped form and are matched in diameter to the cross-section of the pressure container (2).

5. Gas generator according to claim 4, characterised in that a central passage (7) is provided in the disc-shaped pressing (3).

6. Gas generator according to claim 4 or 5, characterised in that elevations (8) and/or depressions are provided on the disc-shaped pressing (3), by which intermediate spaces (9) are formed in the column-type package between the disc-shaped pressings (3).

7. Gas generator according to claim 1, 3 or 3, characterised in that the stackable pressings have stick-shaped form and are matched in their length to the length of the pressure container.

8. Gas generator according to claims 1 to 7, characterised in that the column-shaped package of the stackable pressings (3) is wrapped with a shrink-fit tube (13) or other protecting coverings.

## Revendications

1. Générateur de gaz pour un sac gonflable comprenant un réservoir à pression associé à un élément d'allumage (4), une substance génératrice de gaz étant brûlée à l'intérieur du réservoir à pression après son amorçage, et le gaz s'écoulant par l'intermédiaire d'ouvertures (10) munies de filtres (11) dans la paroi du réservoir à pression vers un sac gonflable monté dessus, **caractérisé** en ce qu'au moins deux réservoirs à pression (2) tubulaires sont montés à la manière de rayons sur un corps central (1) contenant l'élément d'allumage (4), les substances génératrices de gaz se présentant sous la forme de corps moulés (3) empilables remplissent sensiblement la section du tube comme garniture en forme de colonne, et au moins un canal de gaz (7) est prévu dans chaque garniture en forme de colonne.

2. Générateur de gaz selon la revendication 1, **caractérisé** en ce que les réservoirs à pression (2) tubulaires sont identiques et sont fixés sur le corps central (1) en position symétrique de rotation ou en position symétrique inverse.

3. Générateur de gaz selon la revendication 1 ou 2, **caractérisé** en ce que le réservoir à pression (2) tubulaire est un cylindre droit à section circulaire.

4. Générateur de gaz selon la revendication 1, 2 ou 3, **caractérisé** en ce que les corps moulés (3) empilables ont une forme de disque et ont un diamètre adapté à la section du réservoir à pression (2).

5. Générateur de gaz selon la revendication 4, **caractérisé** en ce que le corps moulé (3) en forme de disque comporte un perçage (7) central.

6. Générateur de gaz selon la revendication 4 ou 5, **caractérisé** en ce que le corps moulé (3) en forme de disque est muni de saillies (8) et/ou de creux, qui forment des espaces (9) entre les corps moulés (3) en forme de disque dans le cas d'une garniture en forme de colonne.

7. Générateur de gaz selon la revendication 1, 2 ou 3, **caractérisé** en ce que les corps moulés empilables ont une forme de barreau dont la longueur est adaptée à la longueur du réservoir à pression.

8. Générateur de gaz selon l'une des revendications 1 à 7, **caractérisé** en ce que la garniture en forme de colonne de corps moulés (3) empilables est entourée d'une enveloppe rétractable (13) ou d'autres revêtements formant armure.

Fig. 1

Fig. 2

6

Fig. 3

Fig. 4

Fig. 5

Fig. 6

Fig. 7

Fig. 8